(19) Europäisches Patentamt / European Patent Office / Office européen des brevets

(11) **EP 4 383 130 A1**

(12) **EUROPEAN PATENT APPLICATION**

(43) Date of publication:
**12.06.2024 Bulletin 2024/24**

(21) Application number: **23214675.3**

(22) Date of filing: **06.12.2023**

(51) International Patent Classification (IPC):
**G06N 3/0442** (2023.01)   **G06N 3/0464** (2023.01)
**G06N 3/063** (2023.01)   **G06N 3/045** (2023.01)

(52) Cooperative Patent Classification (CPC):
**G06N 3/063; G06N 3/0442; G06N 3/0464;**
**G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 KR 20220169096**

(71) Applicant: **Samsung Electronics Co., Ltd.**
**Suwon-si, Gyeonggi-do 16677 (KR)**

(72) Inventors:
- **PARK, Junseok**
  **Suwon-si 16677 (KR)**
- **KWON, Suknam**
  **Suwon-si 16677 (KR)**
- **PARK, Changsoo**
  **Suwon-si 16677 (KR)**
- **LEE, Heonsoo**
  **Suwon-si 16677 (KR)**
- **HONG, Byungchul**
  **Suwon-si 16677 (KR)**

(74) Representative: **Marks & Clerk LLP**
**15 Fetter Lane**
**London EC4A 1BW (GB)**

(54) **APPARATUS AND METHOD FOR NEURAL NETWORK TILING**

(57) A method for tiling a neural network includes obtaining input data including neural network information of the neural network; calculating a skewness of a matrix operation between a feature map and a kernel of the neural network based on the neural network information; determining that the matrix operation comprises a memory bounded operation based on the skewness of the matrix operation; tiling the feature map and the kernel based on the determination; and executing the neural network based on the tiling.

FIG. 4

**Description**

BACKGROUND

The present disclosure relates to a neural network, and more particularly, to an apparatus and method for neural network tiling.

A neural network, or artificial neural network (ANN), may be employed in a variety of applications. A neural network may utilize many matrix operations performed by dedicated hardware. To execute a neural network in hardware, parameters of the neural network may be divided into smaller processing units (i.e., tiles), and the tiled units may be individually processed by the hardware. The performance of neural network processing by hardware may depend on neural network tiling. Therefore, there is a need in the art for more efficient methods for tiling a neural network.

SUMMARY

Embodiments of the present disclosure include an apparatus and method for efficiently performing neural network tiling.

According to an aspect of the embodiments of the present disclosure, a method for tiling a neural network includes: obtaining input data including neural network information of the neural network; calculating a skewness of a matrix operation between a feature map and a kernel of the neural network based on the neural network information; determining that the matrix operation comprises a memory bounded operation based on the skewness of the matrix operation; tiling the feature map and the kernel based on the determination.

According to another aspect of the embodiments of the present disclosure, an apparatus includes: at least one processor; and a non-transitory storage medium storing instructions that cause the at least one processor to perform a method for tiling a neural network including a plurality of layers to be executed in hardware, when executed by the at least one processor. The method includes obtaining input data including neural network information of the neural network; calculating a skewness of a matrix operation between a feature map and a kernel of the neural network based on the neural network information; determining that the matrix operation comprises a memory bounded operation based on the skewness of the matrix operation; and tiling the feature map and the kernel based on the determination.

According to another aspect of the embodiments of the present disclosure, a non-transitory storage medium storing instructions that cause at least one processor to perform a method for tiling a neural network including a plurality of layers to be executed in hardware, when executed by the at least one processor. The method includes obtaining input data including neural network information of the neural network; calculating a skewness of a matrix operation between a feature map and a kernel of the neural network based on the neural network information; determining that the matrix operation comprises a memory bounded operation based on the skewness of the matrix operation; and tiling the feature map and the kernel based on the determination.

According to another aspect of the embodiments of the present disclosure, a method includes: performing a first tiling of a neural network that includes a feature map and a kernel; calculating a skewness of a matrix operation between the feature map and the kernel of the neural network based on the first tiling; performing a second tiling of the neural network based on the skewness; and executing the neural network based on the second tiling.

At least some of the above and other features of the invention are set out in the claims.

BRIEF DESCRIPTION OF THE DRAWINGS

Embodiments of the disclosure will be more clearly understood from the following detailed description taken in conjunction with the accompanying drawings in which:

FIG. 1 is a block diagram illustrating an apparatus according to an embodiment;
FIG. 2 is a diagram illustrating matrix operations according to an embodiment;
FIGS. 3A to 3D are diagrams illustrating examples of matrix operations according to embodiments;
FIG. 4 is a flowchart illustrating a method for neural network tiling, according to an embodiment;
FIG. 5 is a graph showing a memory bounded area and a computation bounded area, according to an embodiment;
FIG. 6 is a three-dimensional graph showing areas defined by reference data in a three-dimensional space, according to an embodiment;
FIG. 7 is a graph showing a relationship between memory size and skewness, according to an embodiment;
FIG. 8 is a flowchart illustrating a method for neural network tiling, according to an embodiment;
FIG. 9 is a flowchart illustrating a method for neural network tiling, according to an embodiment;
FIGS. 10A and 10B are diagrams illustrating examples of tiling according to embodiments;
FIG. 11 is a flowchart illustrating a method for neural network tiling, according to an embodiment;

FIG. 12 is a diagram illustrating iterative tiling according to an embodiment;

FIG. 13 is a block diagram illustrating a processing unit according to an embodiment;

FIG. 14 is a block diagram illustrating a processing device according to an embodiment;

FIG. 15 is a diagram illustrating examples of a tiled neural network according to an embodiment;

FIG. 16 illustrates an operation of scheduling the neural networks of FIG. 15, according to an embodiment;

FIG. 17 is a block diagram illustrating a computing system according to an embodiment; and

FIG. 18 is a block diagram illustrating a computing system according to an embodiment.

DETAILED DESCRIPTION

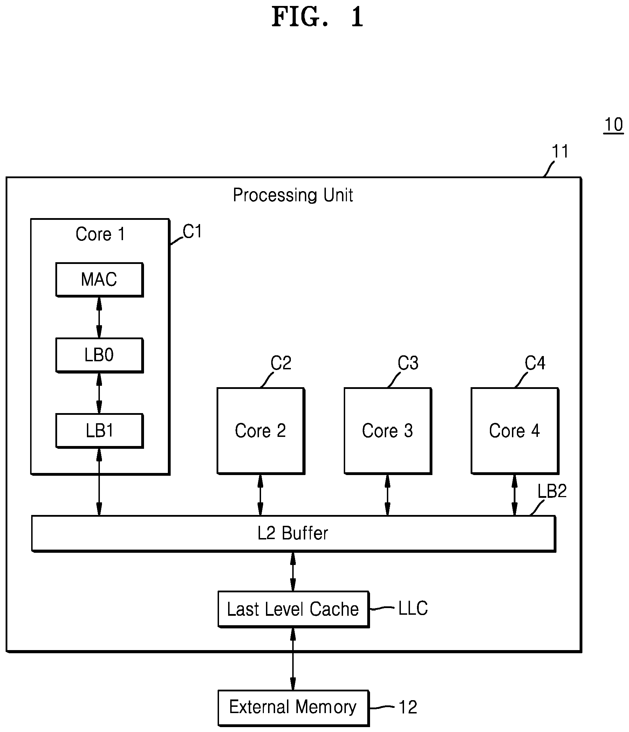

FIG. 1 is a block diagram illustrating an apparatus 10 according to an embodiment. As shown in FIG. 1, the system 10 may include a processing unit 11 and an external memory 12. The apparatus 10 may refer to a hardware that includes a neural network. For example, the apparatus 10 may include one or more integrated circuits, and the processing unit 11 and the external memory 12 may be included in at least one integrated circuit. The apparatus 10 may provide functionality by processing neural networks.

Neural networks or artificial neural networks may include statistical learning algorithms that mimic biological neurons in machine learning. A neural network may refer to a model in which artificial neurons (nodes) that form a network by synaptic coupling change synaptic coupling strength through learning to have problem-solving capabilities. Each connection, or edge between the nodes, transmits a signal from one node to another (like the physical synapses in a brain). When a node receives a signal, it processes the signal and then transmits the processed signal to other connected nodes. In some cases, the signals between nodes comprise real numbers, and the output of each node is computed by a function of the sum of its inputs. In some examples, nodes may determine their output using other mathematical algorithms (e.g., selecting the max from the inputs as the output) or any other suitable algorithm for activating the node. Each node and edge is associated with one or more node weights that determine how the signal is processed and transmitted.

During the training process, these weights are adjusted to improve the accuracy of the result (i.e., by minimizing a loss function which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse certain layers multiple times.

A neural network is a non-limiting example, and may include various Convolutional Neural Network (CNN), Recurrent Neural Network (RNN), Perceptron, Feed Forward (FF), Radial Basis Network (RBF), Deep Feed Forward (DFF), Long Short Term Memory (LSTM), Gated Recurrent Unit (GRU), Auto Encoder (AE), Variational Auto Encoder (VAE), Denoising Auto Encoder (DAE), Sparse Auto Encoder (SAE), Markov Chain (MC), Hopfield Network (HN), Boltzmann Machine (BM), Restricted Boltzmann Machine (RBM), Deep Belief Network (DBN), Deep Convolutional Network (DCN), Deconvolutional Network (DN), Deep Convolutional Inverse Graphics Network (DCIGN), Generative Adversarial Network (GAN), Liquid State Machine (LSM), Extreme Learning Machine (ELM), Echo State Network (ESN), Deep Residual Network (DRN), Differentiable Neural Computer (DNC), Neural Turing Machine (NTM), Capsule Network (CN), Kohonen Network (KN), and Attention Network (AN).

Referring to FIG. 1, the processing unit 11 may include first to fourth cores C1 to C4, an L2 buffer LB2, and a last level cache LLC. In some embodiments, processing unit 11 may be dedicated hardware configured for processing neural networks, and may be referred to as a neural processing unit (NPU). In some embodiments, the processing unit 11 may include a different number of cores than shown in FIG. 1. In some embodiments, the first to fourth cores C1 to C4 may be homogeneous or heterogeneous. In some examples, the first to fourth cores C1 to C4 may be identical or similar to each other in architecture, capabilities, and functionalities. The first to fourth cores C1 to C4 may be configured to perform similar tasks and have comparable specifications. In some examples, the first to fourth cores C1 to C4 may have distinct architectures, capabilities, or functionalities. For example, a core of the first to fourth cores C1 to C4 may be optimized for specific types of computations or tasks, providing a diverse set of processing capabilities within the processing unit 11. As shown in FIG. 1, the first to fourth cores C1 to C4 may share an L2 buffer LB2.

The apparatus 10 may have a memory hierarchy. For example, the memory hierarchy may include several levels of caches, such as L0, L1, L2, L3 caches, and external memory. For example, as shown in FIG. 1, the first core C1 may include a multiply-accumulate circuit MAC, an L0 buffer LB0, and an L1 buffer LB1. The multiply-accumulate circuit MAC may refer to a circuit configured to process multiplication and accumulation at high speed, and may perform matrix operations for neural network processing. In a core, for example, the first core C1, the multiply-accumulate circuit MAC may communicate with the L0 buffer LB0, and the L0 buffer LB0 may communicate with the L1 buffer LB1. In the processing unit 11, the L1 buffer LB1 may communicate with the L2 buffer LB2, and the L2 buffer LB2 may communicate with the last level cache LLC. The last level cache LLC may communicate with the external memory 12 external to the processing unit 11.

The external memory 12 may store data used for neural network processing. For example, the data stored may include training data, model parameters, intermediate results, input and output data, or other relevant information for neural network computations. In some embodiments, the external memory 12 may include volatile memory, such as dynamic random access memory (DRAM), static random access memory (SRAM), and the like. In some embodiments, the external memory 12 may include non-volatile memory, such as flash memory, resistive random access memory (RRAM), or the like.

As the level in the memory hierarchy increases and becomes closer to the multiply-accumulate circuit MAC, the size of the memory may be reduced, and the data bandwidth may be increased. For example, the data bandwidth (e.g., 10 TB/s) between the multiply-accumulate circuit MAC and the L0 buffer LB0 may be greater than the data bandwidth (e.g., 300 GB/s) between the L0 buffer LB0 and the L1 buffer LB1. Similarly, the data bandwidth (e.g., 100 GB/s) between the L2 buffer LB2 and the last level cache LLC may be greater than the data bandwidth (e.g., 50 GB/s) between the L2 buffer LB2 and the external memory 12. Accordingly, to make the multiply-accumulate circuit MAC perform matrix operations without stopping, the bandwidth difference between the multiply-accumulate circuit MAC and the external memory 12 may be overcome through data reuse. Data reuse refers to utilizing data that has already been accessed or stored in a higher level of the memory hierarchy, rather than retrieving it again from a lower level or external memory. In some examples, data reuse involves leveraging the available data within the memory hierarchy to minimize data transfers and improve overall performance and efficiency. For example, data reuse may be employed to mitigate the impact of this bandwidth in data bandwidth between the MAC and the external memory. A reuse factor may refer to a level of data reuse and a higher reuse factor may be desirable. For example, a higher reuse factor indicates a greater utilization of already-accessed data, which can improve performance and reduce reliance on slower or more limited bandwidth connections between different memory levels.

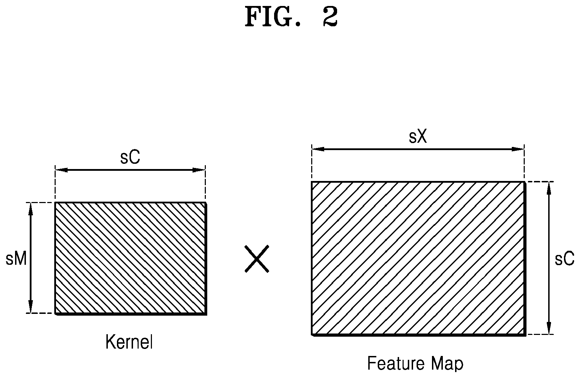

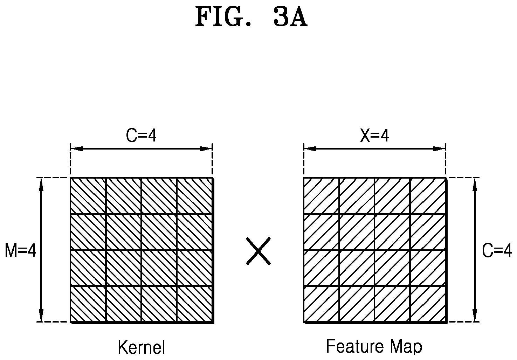

To improve the performance of executing the neural network in the processing unit 11, the neural network may be tiled, and the tiled units may be sequentially processed in the processing unit 11. For example, a neural network may include a plurality of layers, and tiled units from each of the layers may be processed by the processing unit 11. As described below with reference to FIGS. 2 and 3A to 3D, data reuse may depend on tiled units from a layer, and accordingly, layer tiling, i.e., neural network tiling, may be important to the processing performance of a neural network in the apparatus 10. Herein, neural network tiling may be referred to as network tiling, layer tiling, or tiling.

Tiling of the neural network may be determined based on multiple factors. These factors may include the input channel, output channel, feature map size, kernel size, and other relevant parameters associated with each layer of the network. For example, a layer may include a feature map and a kernel (or weight filter), and tiling may be defined by an input channel, an output channel, the size of a feature map, the size of a kernel, etc., and accordingly, it may not be easy to accurately and efficiently detect optimal tiling due to a very wide search space. As described below with reference to the drawings, optimal tiling for data reuse may be derived, and thus the performance and efficiency of neural network processing may be increased. Also, due to the easily detected tiling, online tiling may be performed. A quantitative indicator for the tiled neural network may be provided, and accordingly, the design of hardware and the scheduling of the neural network may be optimized.

FIG. 2 is a diagram illustrating matrix operations according to an embodiment. A neural network may include a plurality of matrix operations. For example, a neural network may include a plurality of layers, and each layer of the plurality of layers may include matrix operations such as multiplication of a feature map with a kernel (or weight filter). Each feature map and kernel may be represented by matrices, and multiplication of feature maps and kernels may be processed by matrix operations. As described above with reference to FIG. 1, the layers may be tiled, such that processing unit 11 of FIG. 1 may perform matrix operations between the tiled feature maps and the tiled kernels.

Data reuse may be increased as the size of the tiled feature map and the tiled kernel increases, that is, as the size of the memory storing the data increases. For example, as shown in FIG. 2, if the kernel corresponds to a matrix of size (sM x sC) and the feature map corresponds to a matrix of size (sC x sX) (C, M, X, s are integers greater than zero), the amount of computation may correspond to $s^3MCX$, and the required memory size may correspond to $s^2(MC + XC)$. That is, while the amount of computation is proportional to the cube of the scale factor s, the memory size may be proportional to the square of the scale factor s. Therefore, as the scale factor s increases, it may mean that a greater amount of computation may be performed with given data, and that data reuse may be increased. However, the memory size may be limited in hardware, and as described below with reference to FIGS. 3A to 3D, data reuse may depend on the shape of the matrix as well as the memory size.

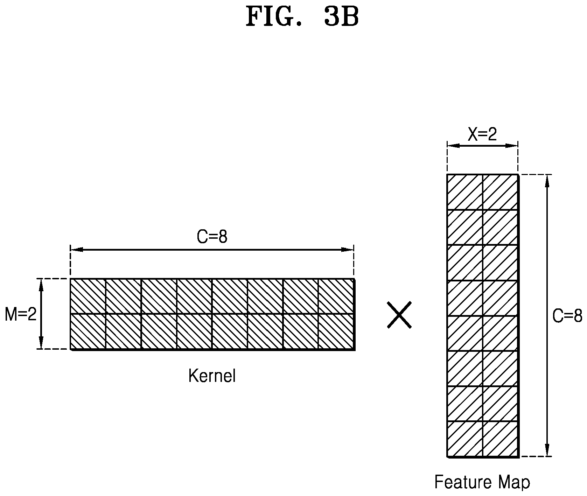

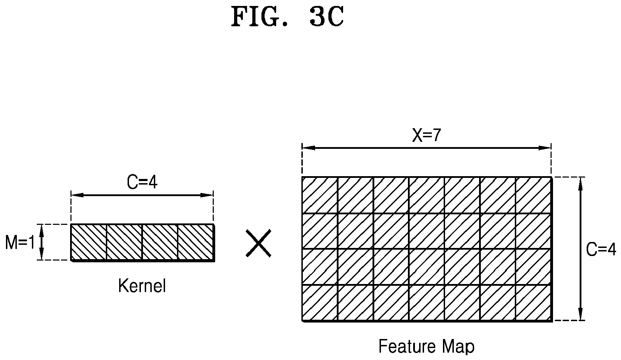

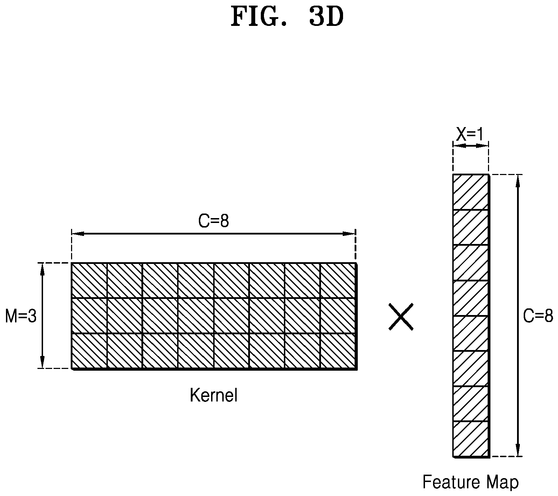

FIGS. 3A to 3D are diagrams illustrating examples of matrix operations according to embodiments of the present disclosure. For example, FIGS. 3A and 3B show operations on matrices of the same size, and FIGS. 3C and 3D show operations on matrices of different sizes. FIGS. 3A and 3C show matrix operations corresponding to a shorter input channel depth (or input channel length), and FIGS. 3B and 3D show matrix operations corresponding to a longer input channel depth. The matrix operation of FIG. 3A may have a reuse factor of 4, the matrix operation of FIG. 3B may have a reuse factor of 2, the matrix operation of FIG. 3C may have a reuse factor of 1.75, and the matrix operation of FIG.

3D may have a reuse factor of 1.5.

Data reuse may decrease as the length of the input channel increases. The reusable part in matrix operation may be in a spatial direction and an output channel direction, and accordingly, the size of the reusable part may decrease when an input channel becomes longer. For example, the matrix operation of FIG. 3A may have a higher reuse factor than the matrix operation of FIG. 3B, and the matrix operation of FIG. 3C may have a higher reuse factor than the matrix operation of FIG. 3D.

Data reuse may decrease as the size difference between matrices increases. As described above, the total data reuse may be expressed as the product of the spatial direction and the output channel direction, but the total amount of a type of data may be expressed as the sum the type of data in both directions. For example, the matrix operation of FIG. 3A may have a higher reuse factor than the matrix operation of FIG. 3C, and the matrix operation of FIG. 3B may have a higher reuse factor than the matrix operation of FIG. 3D.

The size difference between matrices may be referred to as skewness of the matrices. For example, skewness may be defined as the ratio of the size of a larger matrix to the size of a smaller matrix from a pair of two matrices, as shown in Equation 1 below.

[Equation 1]

$$Skewness = \frac{Size\ of\ larger\ matrix}{Size\ of\ smaller\ matrix}$$

Accordingly, the skewness may decrease as the size difference between the larger and the smaller matrix is decreased. The minimum value of skewness may be 1. For example, each of the matrix operations of FIG. 3A and the matrix operations of FIG. 3B may have a skewness of 1, the matrix operation of FIG. 3C may have a skewness of 7, and the matrix operation of FIG. 3D may have a skewness of 3. As shown in FIGS. 3A to 3D, a matrix operation having a lower skewness at the same input channel depth may have a higher reuse factor. Therefore, tiling providing a higher skewness may be advantageous, and tiling considering skewness will be described below with reference to the drawings.

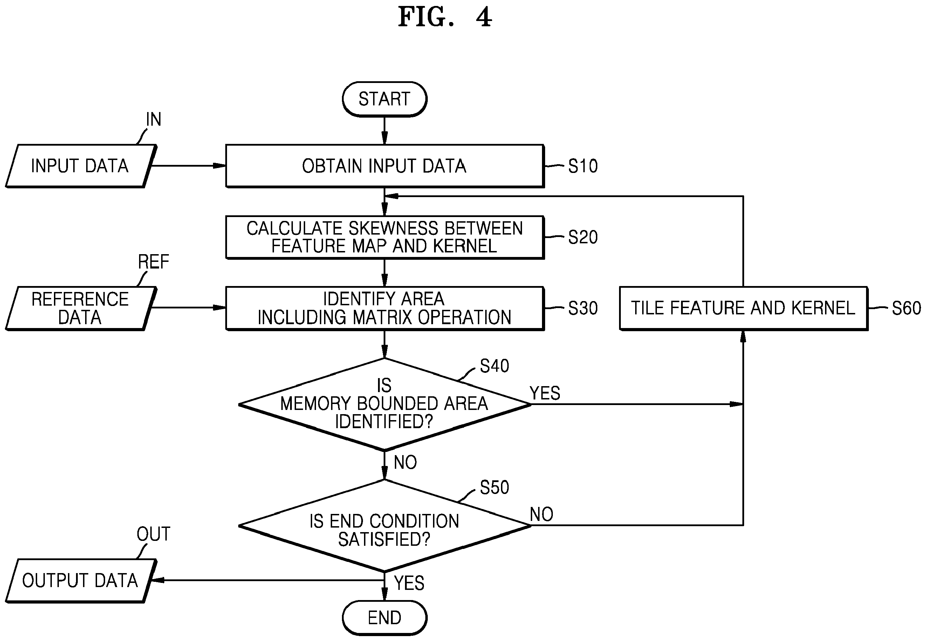

FIG. 4 is a flowchart illustrating a method for neural network tiling according to an embodiment. In some embodiments, the method of FIG. 4 may be performed by a compiler, which may be executed on a device that includes a processor configured to execute instructions. In some examples, performing the method illustrated in FIG. 4 enables optimal tiling, which determines the optimal sizes of feature maps and kernels. These optimal sizes can then be communicated to the hardware, which can be configured to operate accordingly based on the derived sizes.

As shown in FIG. 4, the method for neural network tiling may include a plurality of operations S10 to S60.

The method of FIG. 4 may be performed offline or online. For example, the method of FIG. 4 may be performed in a device independent of hardware executing the neural network, and the tiling result may be provided to the hardware. Alternatively, the method of FIG. 4 may be performed in a system including hardware executing the neural network, and the tiling result may be provided to the hardware before the neural network is executed by the hardware. As described below, the method illustrated in FIG. 4 may reduce resource usage by detecting the optimal tiling, thereby facilitating online tiling and enabling a given piece of hardware to efficiently execute a variety of neural networks.

Referring to FIG. 4, input data IN are obtained in S10. The input data IN includes neural network information such as information about a neural network to be executed in hardware. For example, the input data IN may include information about a plurality of layers included in the neural network, and may include information about a feature map and a kernel included in each of the plurality of layers. For example, this may include information such as the type of layers (e.g., convolutional, pooling, fully connected), the order or sequence of the layers, the number of nodes or units in each layer, activation functions used, and parameters associated with each layer. Also, the input data IN may include information about hardware to execute the neural network. For example, the input data IN may include information about a memory hierarchy included in hardware and information about memory sizes corresponding to levels of the memory hierarchy.

In S20, skewness between the feature map and the kernel is calculated. As described above with reference to FIGS. 3A to 3D, data reuse may be determined based on size differences between matrices. Accordingly, the skewness between the feature map and the kernel may be calculated as, for example, [Equation 1].

In 530, an area including a matrix operation may be identified based on the reference data REF. In some cases, the reference data REF may be used to determine whether an operation of a neural network is limited by memory (i.e., a memory bounded operation) or by computation power (i.e., a computation bounded operation) based on characteristics of a hardware device executing the neural network.

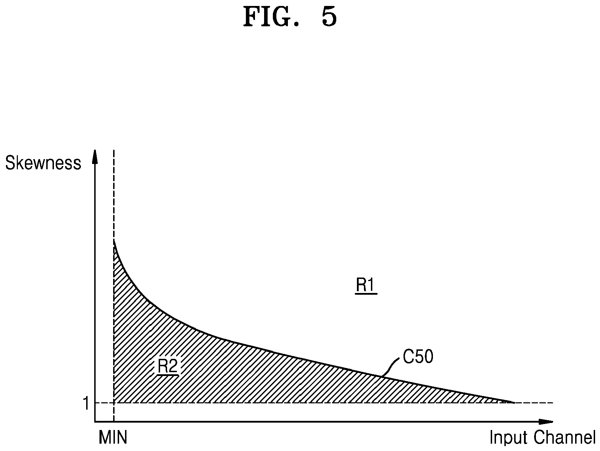

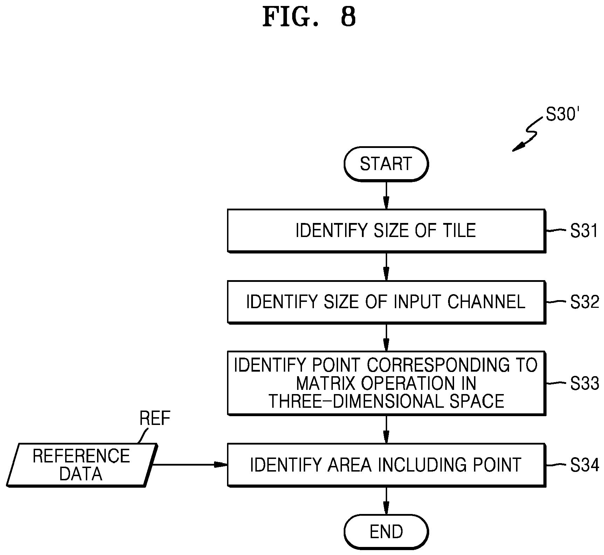

For example, the reference data REF may define a memory bounded area (which may be referred to as a first area herein) and a computation bounded area (which may be referred to herein as a second area) in a three-dimensional space defined by a memory size, skewness, and an input channel. In some cases, the reference data REF may include pre-defined or pre-determined information or parameters which are used for identifying the memory bounded area and computation bounded area in the three-dimensional space. When the matrix operation is included in the memory bounded area, this may mean a state in which memory bandwidth limits the performance of the matrix operation, and the multiply-accumulate circuit MAC of FIG. 1 may have an idle time. In some examples, when the matrix operation is included in the computation bounded area, the performance of matrix operation may be limited by the multiply-accumulate circuit (MAC), therefore the memory bandwidth may not be fully utilized. An optimal tiling may be performed so that matrix operation is included in the computation bounded area and the sacrifice of memory bandwidth may be minimized to improve the performance of neural networks executed by a given hardware. Examples of the memory bounded area and the computation bounded area defined by the reference data REF will be described later with reference to FIGS. 4 and 5, and an example of S30 will be described later with reference to FIG. 8.

In S40, it may be determined whether the memory bounded area is identified. As shown in FIG. 4, when the memory bounded area is identified in S30, for example, when the matrix operation is included in the memory bounded area, S60 may be subsequently performed. On the other hand, if the computation bounded area is identified in 530, i.e., if the matrix operation is included in the computational amount bounded area, S50 may be performed subsequently.

According to some embodiments, when the matrix operation is included in the computation bounded area, it may be determined whether the end condition is satisfied in 550. This determination may be based on the tiled feature map and the size of the kernel, that is, the size of the tile. For example, the input data IN may include available memory size, that is, information about a memory budget, and it may be determined that the end condition is satisfied when the size of the tile is less than or equal to the memory budget. The memory budget may refer to the maximum amount of memory resources that can be allocated or utilized by a system or hardware component. In some examples, the limit on the available memory capacity for storing data and executing operations is determined based on the memory budget. As shown in FIG. 4, the method of FIG. 4 may end when the end condition is satisfied, while S60 may be performed subsequently when the end condition is not met. When the end condition is satisfied, output data OUT including a tiling result may be generated. For example, the output data may include information, such as sizes, of the finally tiled kernel and the finally tiled feature map. In some embodiments, output data OUT may include skewness of the matrix operations of the finally tiled kernel and the finally tiled feature map.

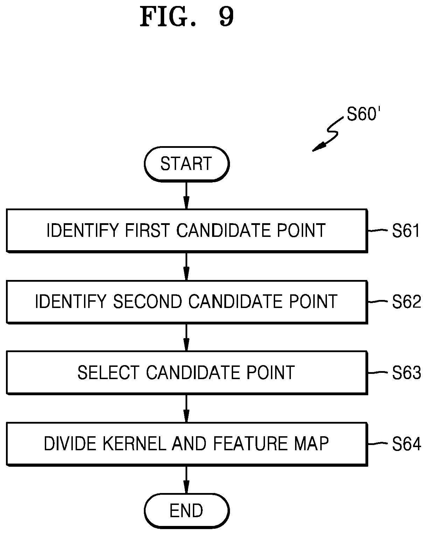

In S60, feature maps and kernels may be tiled. Neural network tiling refers to partitioning or dividing a layer of a neural network into smaller units or tiles for processing. Computations such as matrix operations may be performed on each tile independently. Changing the tiling of the feature map and the kernel of a layer can change the number of parameters from the feature map and the kernel that are processed in each matrix operation. This can change the skewness of the matrix operation. If the matrix operation is included in the memory bounded area, the current tile may not be an optimal tile, and thus additional tiling may be required. In addition, if the end condition is not satisfied in 550, it may be difficult to apply the current tile to the given hardware, and thus additional tiling may be required. As described above with reference to FIG. 1, tiling may be performed in various ways, and one of the various ways may be selected in S60. An example of S60 will be described later with reference to FIG. 9.

Accordingly, some embodiments of the disclosure include performing the neural network tiling multiple times based on the skewness. In some examples, a first tiling is performed by dividing the feature map and the kernel into tiles. Subsequently, the skewness of the matrix operation between the feature map and the kernel is calculated. Based on the calculated skewness, a second tiling of the neural network may be performed. The second tiling may further improve the performance of the neural network compared with the first tiling. Finally, the neural network is executed by performing the first tiling and the second tiling sequentially. However, embodiments of the present disclosure are not limited thereto. For example, the method may include performing the tiling more than twice until an optimized performance is obtained.

In some examples, the method includes iteratively tiling the neural network and calculating the skewness until an end condition is satisfied. For example, the tiling and the skewness calculation are performed repeatedly, with each iteration refining the tiling arrangement and assessing the skewness of the matrix operation.

In some examples, the method further includes determining a location in a multidimensional space that represents the first tiling configuration based on the calculated skewness value obtained from the first tiling process. The multidimensional space may be a space defined by various parameters, such as tile sizes, input channel dimensions, and skewness. For example, by identifying the location in this multidimensional space, a representation of the initial tiling may be determined. This location may be used as a reference point for subsequent tiling adjustments. In some examples, the second tiling is then performed based on this identified location.

In some examples, the method further includes determining a region in the multidimensional space that encompasses the location identified. This region is defined based on specific hardware characteristics relevant to the tiling process. The hardware characteristics may include factors such as memory capacity, computational resources, or other constraints imposed by the hardware. For example, by determining this region, the second tiling process is performed within the boundaries defined by the hardware capabilities. For example, the region may be used as a constraint or guideline for making adjustments and optimizing the tile arrangements. The second tiling may then be executed based on the determined region so that the resulting tiling configuration remains feasible and compatible with the available hardware resources.

FIG. 5 is a graph showing a memory bounded area and a computation bounded area according to an embodiment. As described above with reference to FIG. 4, the reference data REF may define a memory bounded area and a computation bounded area, and FIG. 5 shows a memory bounded area R1 and a computation bounded area R2 defined in a memory.

Referring to FIG. 5, the boundary between the memory bounded area R1 and the computation bounded area R2 is shown. For example, the curve C50 may represent the maximum skewness in which performance is not limited by the memory bandwidth in a given input channel. As described above with reference to the drawings, data reuse may be increased as the size of the input channel decreases, as shown in the curve C50 of FIG. 5, a higher maximum skewness may be obtained as the size of the input channel decreases. Accordingly, the memory bounded area R1 may be defined as an upper area of the curve C50, and the computation bounded area R2 may be defined as a lower area of the curve C50. Matrix operation may correspond to one point in the graph of FIG. 5 according to the input channel and skewness and depending on the area in which the corresponding point is included, it may be identified whether matrix operation is limited in memory or computation. The graph of FIG. 5 may be defined in advance, and the reference data REF of FIG. 4 may include data corresponding to the graph of FIG. 5.

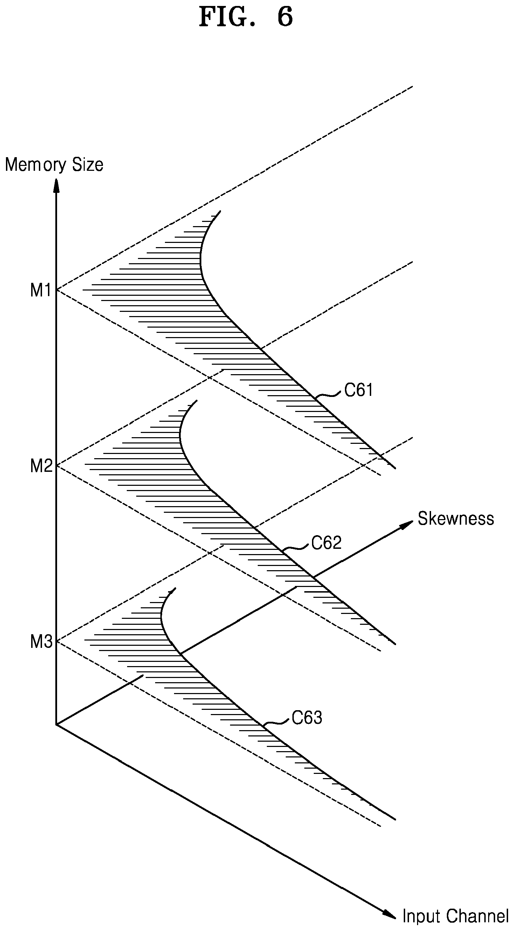

FIG. 6 is a three-dimensional graph showing areas defined by reference data in a three-dimensional space according to an embodiment. As described above with reference to FIG. 5, a memory bounded area and a computation bounded area may be defined based on size of input channels and skewness in a given memory size.

The reference data REF of FIG. 4 may define a memory bounded area and a computation bounded area respectively corresponding to various memory sizes. For example, as shown in FIG. 6, the reference data REF may define a first curve C61 in the first memory size M1, and the first curve C61 may correspond to a boundary between the memory bounded area and the computation bounded area. The reference data REF may define a second curve C62 at a second memory size M2 smaller than the first memory size M1, and the second curve C62 may correspond to a boundary between the memory bounded area and the computation bounded area. The reference data REF may define a third curve C63 at a third memory size M3 smaller than the second memory size M2, and the third curve C63 may correspond to a boundary between the memory bounded area and the computation bounded area. However, embodiments of the present disclosure are not limited thereto. For example, the reference data REF may define curves corresponding to various memory sizes, and accordingly, the memory bounded area and the computation bounded area may each have volumes defined by curved surfaces defined by curves.

As described above with reference to FIG. 2, as the memory size increases, data reuse may be increased, and thus the computation bounded area may be expanded. For example, as shown in FIG. 6, the first curve C61 corresponding to the first memory size M1 may define a computation bounded area wider than the second curve C62 corresponding to the second memory size M2. Also, the second curve C62 corresponding to the second memory size M2 may define a wider computation bounded area than the third curve C63 corresponding to the third memory size M3.

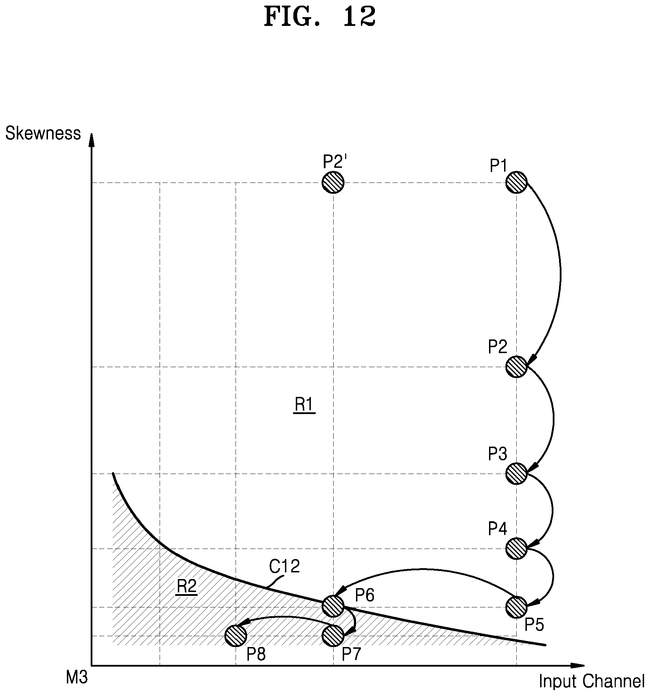

A process of tiling a layer may correspond to moving a point from top to bottom in the three-dimensional space of FIG. 6. For example, initially, a layer may have an initial size, and accordingly, the matrix operation corresponding to the layer before being tiled may correspond to one point defined according to the input channel and skewness in the first memory size M1. After the layer is tiled, the memory size may decrease, and accordingly, the matrix operation may correspond to one point defined according to the input channel and skewness in the second memory size M2. In some cases, during the tiling process, the points in the three-dimensional space are shifted downward, resulting in points that were initially within the memory bounded area transitioning to the computation bounded area. An example related to the movement of a point will be described later with reference to FIG. 12.

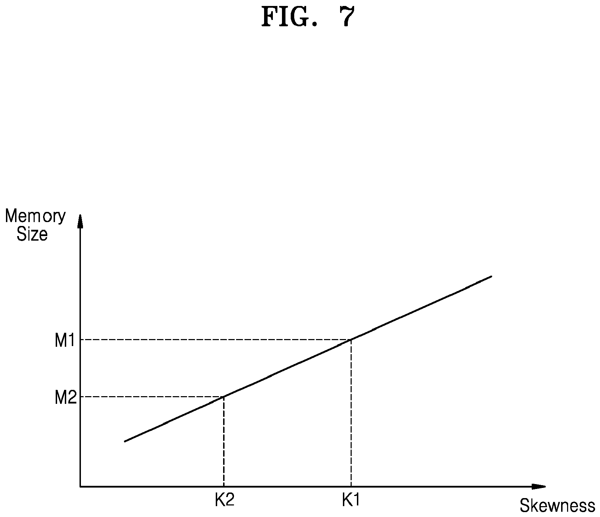

FIG. 7 is a graph showing a relationship between memory size and skewness according to an embodiment. As shown in FIG. 7, the memory size for a given input channel may be proportional to skewness of a matrix operation corresponding to the memory size, the given input channel, and the skewness. For example, a larger memory size may provide a larger maximum skewness. For example, the first skewness K1 provided by the first memory size M1 may be greater than the second skewness K2 provided by the second memory size M2 smaller than the first memory size M1.

Skewness may be used for determining specifications of a hardware executing neural networks. For example, skewness may be used as a quantitative value for whether the current memory size is adequate and the required memory size. For example, the second skewness K2 may be identified as insufficient in the second memory size M2, and a memory (or buffer) having a first memory size M1 for a first skewness K1 greater than the second skewness K2 may therefore be employed.

FIG. 8 is a flowchart illustrating a method for neural network tiling according to an embodiment. For example, the method illustrated in FIG. 8 may be an example of S30 of FIG. 4. As described above with reference to FIG. 4, an area including a matrix operation may be identified based on reference data REF in S30' of FIG. 8. As shown in FIG. 8, S30' may include a plurality of operations S31 to S34. Hereinafter, FIG. 8 will be described with reference to FIG. 4.

Referring to FIG. 8, the size of a tile may be identified in S31, and the size of an input channel may be identified in S32. For example, a first size of a feature map and a second size of a kernel corresponding to an initial layer or a tiled layer may be identified, and a size of an input channel may be identified. For example, layers other than the initial layer or the tiled layer may have features maps of a size different from the first size, and kernels of a size different from the second.

In S32, a point corresponding to the matrix operation may be identified in the three-dimensional space. As described above with reference to FIG. 6, a matrix operation may correspond to one point in a three-dimensional space defined by memory size, skewness, and size of input channels. Properties of the matrix operation, that is, the skewness calculated in S20 of FIG. 4, the size of the tile identified in S31, and the size of the input channel identified in S32 may be obtained, and points corresponding to matrix operations may be identified in the three-dimensional space.

In S34, area region including a point may be identified based on the reference data REF. As described above with reference to FIG. 6, the reference data REF may define a memory bounded area and a computation bounded area in the three-dimensional space. Accordingly, area region including the point identified in S33 may be identified among the memory bounded area and the computation bounded area based on the reference data REF.

FIG. 9 is a flowchart illustrating a method for neural network tiling according to an embodiment. For example, the flowchart of FIG. 9 shows an example of S60 of FIG. 4. As described above with reference to FIG. 4, feature maps and kernels may be tiled in S60' of FIG. 9. As shown in FIG. 9, S60' may include operations from S61 to S64. In the following, FIG. 9 will be described with reference to FIG. 4.

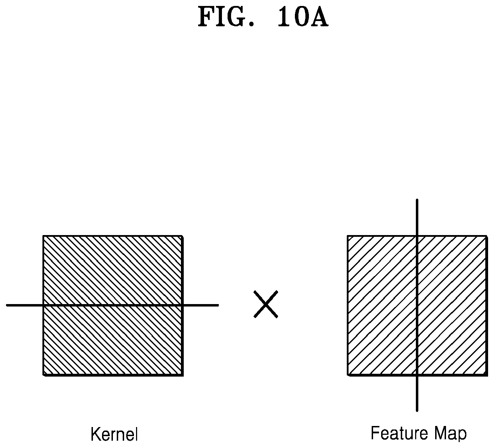

Referring to FIG. 9, a first candidate point may be identified in S61. For example, if the kernel is divided in a kernel row direction and the feature map is divided in a feature map column direction, a first candidate point corresponding to the matrix operation of the divided kernel and the divided feature map may be identified in the three-dimensional space. For example, a first skewness between the divided kernel and the divided feature map may be calculated, and the size of the divided kernel and divided feature map and the input channel size may be identified. An example of a kernel divided in a kernel row direction and a feature map divided in a feature map column direction will be described later with reference to FIG. 10A.

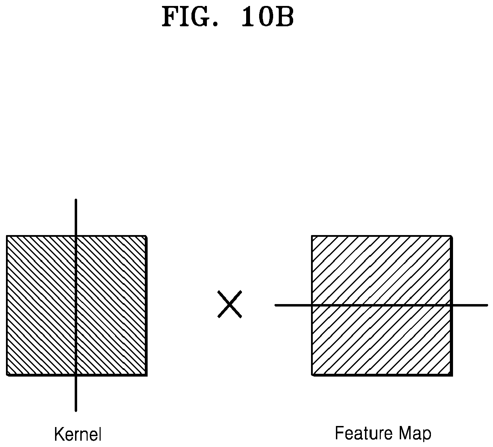

In S62, a second candidate point may be identified. For example, when a kernel is divided in a kernel column direction and a feature map is divided in a feature map row direction, a second candidate point corresponding to a matrix operation of the divided kernel and the divided feature map may be identified in the three-dimensional space. For example, a second skewness between the divided kernel and the divided feature map may be calculated, and the size of the divided kernel and divided feature map and the input channel size may be identified. An example of a kernel divided in a kernel column direction and a feature map divided in a feature map row direction will be described later with reference to FIG. 10B.

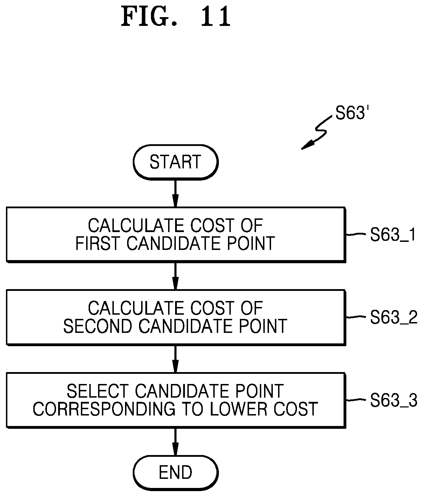

In S63, candidate points may be selected. For example, one of the first candidate points identified in S61 and the second candidate point identified in S62 may be selected. For example, a first candidate point and a second candidate point may be evaluated, and a candidate point providing a better evaluation result may be selected. An example of S63 will be described later with reference to FIG. 11.

In S64, kernels and feature maps may be divided. For example, when the first candidate point is selected in S63, the kernel may be split in a kernel row direction and the feature map may be split in a feature map column direction. On the other hand, if the second candidate point is selected in S63, the kernel may be divided in the kernel column direction and the feature map may be divided in the feature map row direction.

FIGS. 10A and 10B are diagrams illustrating examples of tiling according to embodiments of the present disclosure. For example, the kernel and feature map divided as shown in FIG. 10A may correspond to the first candidate point of FIG. 9, and as shown in FIG. 10B, the divided kernel and feature map may correspond to the second candidate point of FIG. 9.

Referring to FIG. 10A, a kernel may be divided in a kernel row direction and a feature map may be divided in a feature map column direction. Accordingly, the kernel may be divided into an upper part and a lower part, the feature map may be divided into a left part and a right part, and the length of the input channel may be maintained. Referring to FIG. 10B, a kernel may be divided in a kernel column direction and a feature map may be divided in a feature map row direction. Accordingly, the kernel may be divided into a left part and a right part, the feature map may be divided into an upper part and a lower part, and the length of the input channel may be reduced. As will be described later with reference to FIG. 12, as shown in FIG. 10A, the divided kernel and feature map may have different properties from the divided kernel and feature map as shown in FIG. 10B in matrix operation.

FIG. 11 is a flowchart illustrating a method for neural network tiling according to an embodiment. For example, the flowchart of FIG. 11 shows an example of S63 of FIG. 9. As described above with reference to FIG. 9, one of the first candidate point and the second candidate point may be selected in S63' of FIG. 11. As shown in FIG. 11, S63' may include a plurality of operations S63_1 to S63_3. Hereinafter, FIG. 11 will be described with reference to FIG. 9.

Referring to FIG. 11, the cost of a first candidate point may be calculated in S63_1, and the cost of a second candidate point may be calculated in S63_2. In some embodiments, a candidate point may be selected based on a greedy search. A greedy search refers to an algorithmic approach that makes locally optimal choices at each step in order to find a global optimum. For example, the greedy search may select the best available option at each decision point without considering the future consequences, generating the choice that appears to be the most advantageous in the current situation. For example, the cost of the first candidate point and the cost of the second candidate point may be calculated, respectively, and the calculated costs may be compared. In some embodiments, the cost of a candidate point may be calculated using a cost function based on skewness. An example of a cost function will be described below with reference to FIG. 12.

In S63_3, a candidate point corresponding to a first lower cost may be selected. For example, the costs calculated in S63_1 and S63_2 may be compared, and a candidate point corresponding to a second lower cost among the first candidate point and the second candidate point may be selected, and the second lower cost is lower than the first lower cost. As described above with reference to FIG. 9, kernels and feature maps may be divided according to the selected candidate points.

FIG. 12 is a diagram illustrating iterative tiling according to an embodiment. As described above with reference to FIG. 4, tiling may be repeated when a point corresponding to a matrix operation is included in a memory bounded area or when an end condition is not satisfied. FIG. 12 shows points on the plane consisting of skewness and size of input channels in the third memory size M3, but as described above with reference to FIG. 6, as tiling progresses, a point may move downward in a three-dimensional space.

Referring to FIG. 12, a feature map and a kernel may be tiled at a first point P1, and thus a second point P2 corresponding to the divided feature map and kernel may be obtained. For example, the second point P2 may correspond to a first candidate point of the first point P1 corresponding to a kernel divided in a kernel row direction and a feature map divided in a feature map column direction. Also, the second candidate point P2' of the first point P1 may correspond to a kernel divided in a kernel column direction and a feature map divided in a feature map row direction. As described above with reference to FIG. 11, the costs of the first candidate point and the second candidate point may be calculated, and the candidate point providing the lower cost may be selected. For example, the cost of the candidate point may be calculated based on the cost function of [Equation 2] below.

[Equation 2]

$$Cost = \frac{Skewness \quad of \quad Candidate}{Skewness \quad of \quad Boundary}$$

In some examples, the cost function may correspond to the ratio of the skewness of the candidate point to the skewness of the boundary between the memory bounded area and the computation bounded area. Accordingly, as illustrated by the example of FIG. 12, the second candidate point P2' provides a cost due to the increase in skewness caused by the boundary C12 between the memory bounded area R1 and the computation bounded area R2, but since the first candidate point, that is, the second point P2 provides a cost due to the reduced skewness, the second point P2 that provides a lower cost may be selected.

In a similar manner, the third to eighth points P3 to P8 may be sequentially selected. For example, as shown in FIG. 12, although the sixth point P6 and the seventh point P7 are included in the computation bounded area R2, the end condition may not be satisfied, and thus tiling may end at the eighth point P8. The size of the tile corresponding to the eighth point P8, that is, the size of the feature map and kernel, may be provided to the hardware as the output data including data corresponding to the finally tiled kernel and the finally tiled feature map.

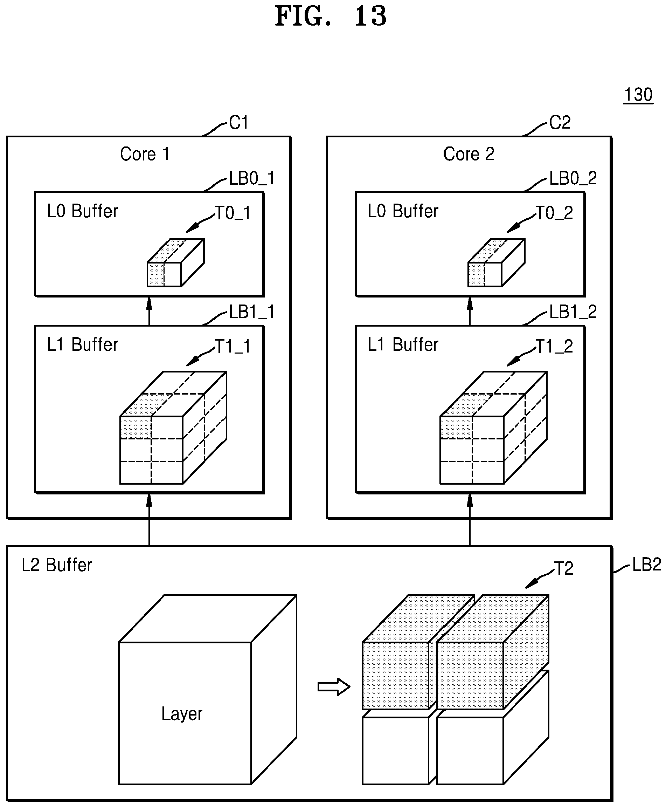

FIG. 13 is a block diagram illustrating a processing unit 130 according to an embodiment. For example, the block diagram of FIG. 13 shows the processing unit 130 to which the neural network tiling described above with reference to the drawings is applied. For example, as depicted in FIG. 13, the processing unit 130 incorporates the neural network tiling technique described earlier with reference to the drawings. As shown in FIG. 13, the processing unit 130 may include a first core C1, a second core C2, and an L2 buffer LB2. The first core C1 may include an L0 buffer LBO_1 and a first buffer LB1_1, and the second core C2 may include an L0 buffer LBO_1 and a first buffer LB1_1. The L2 buffer LB2 may be shared by the first core C1 and the second core C2.

Tiling corresponding to each level of the memory hierarchy may be sequentially performed. For example, the compiler may tile the layers based on the size of the L2 buffer LB2 during this process. Accordingly, as shown in FIG. 13, the layer may be divided into a plurality of L2 tiles T2, and the L2 buffer LB2 may store the plurality of L2 tiles T2. The compiler may tile the L2 tiles based on the size of the L1 buffer LB1_1 or LB_12. For example, the compiler may be a software tool or program that is configured to transform the high-level representation of a program such as the neural network into a lower-level representation that can be executed by the hardware. For example, the compiler may analyze the high-level representation, such as code written in a programming language, optimize the code, perform static checks, and generate an executable output that is tailored to the specific hardware architecture. Accordingly, the L2 tile may be divided into a plurality of L1 tiles T1_1, and the L1 buffer LB1_1 of the first core C1 may store the plurality of L1 tiles T1_1. Similarly, the L2 tile may be divided into a plurality of L1 tiles T1_2, and the L1 buffer LB1_2 of the second core C2 may store the plurality of L1 tiles T1_2. The compiler may tile the L1 tiles based on the size of the L0 buffer LB0_1 or LB0_2. Accordingly, the L1 tile may be divided into a plurality of L0 tiles T0_1, and the L0 buffer LBO_1 of the first core C1 may store the plurality of L0 tiles T0_1. Similarly, the L1 tile may be divided into a plurality of L0 tiles T0_2, and the L0 buffer LB0_2 of the second core C2 may store the plurality of L0 tiles T0_2. The L0 tile may be provided to the multiply-accumulate circuit in the first core C1, and the L0 tile may be provided to the multiply-accumulate circuit in the second core C2.

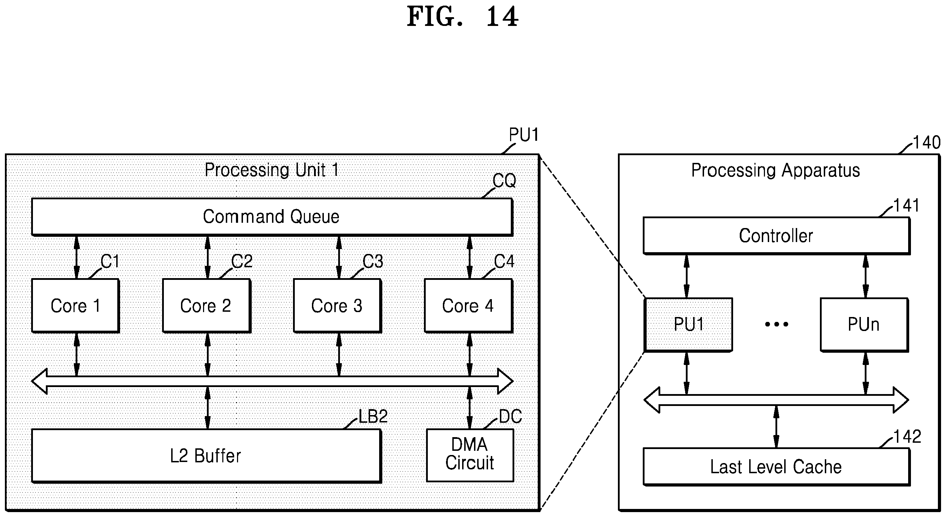

FIG. 14 is a block diagram illustrating a processing device 140 according to an embodiment. As shown in FIG. 14, the processing device 140 may include a controller 141, first to n-th processing units PU1 to PUn, and a last level cache 142 (n is an integer greater than 1).

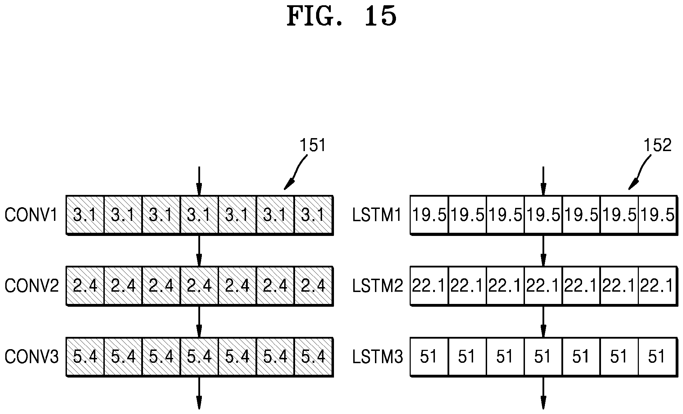

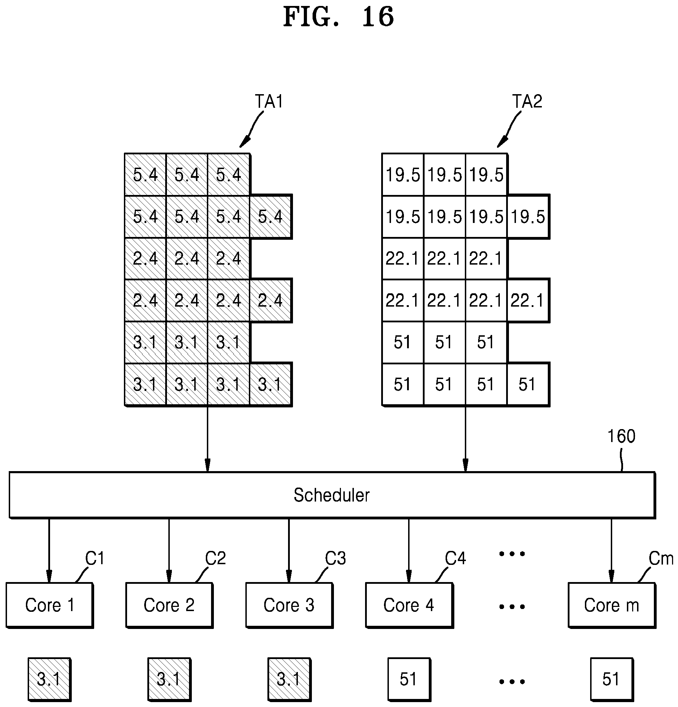

The controller 141 may control the first to n-th processing units PU1 to PUn and may be referred to as a global controller. The first to n-th processing units PU1 to PUn may process at least one neural network, and the controller 141 may schedule at least one neural network processed by the first to n-th processing units PU1 to PUn. In some embodiments, controller 141 may schedule the neural network based on the tiled result. For example, controller 141 may organize and coordinate the execution of the neural network on the first to n-th processing units PU1 to PUn. For example, data generated in the tiling process, such as skewness, may represent properties of a final tile and, accordingly, may be used to schedule a neural network. Examples of an operation of scheduling a neural network will be described later with reference to FIGS. 15 and 16.

Among the first to n-th processing units PU1 to PUn, the first processing unit PU1 may include a command queue CQ, first to fourth cores C1 to C4, an L2 buffer LB2, and a direct memory access (DMA) circuit DC. The first to fourth cores C1 to C4 may execute commands provided from the command queue CQ and may share the L2 buffer LB2. The DMA circuit DC may store the data stored in the L2 buffer LB2 in the L1 buffer of each of the first to fourth cores C1 to C4, or store the data stored in the L1 buffer in the L2 buffer LB2, according to the setting. As a result of tiling, for example, a value representing the size of a tile may be provided to the DMA circuit DC, and the DMA circuit DC may be set to read or store a tile of the size. For example, the DMA circuit DC may include a register, and a value representing the size of a tile may be stored in the register.

FIG. 15 is a diagram illustrating examples of a tiled neural network according to an embodiment, and FIG. 16 illustrates an operation of scheduling the neural networks of FIG. 15 according to an embodiment.

Referring to FIG. 15, the first neural network 151 may include first to third convolution layers CONV1 to CONV3, and the second neural network 152 may include first to third long short-term memory layers LSTM1 to LSTM3. Each of the first neural network 151 and the second neural network 152 may be tiled as described above with reference to the drawings. For example, each of the first neural network 151 and the second neural network 152 may be tiled by online tiling or offline tiling. For example, each layer of the first to third convolution layers CONV1 to CONV3 may be tiled differently, and each layer of the first to third long short-term memory layers LSTM1 to LSTM3 may be tiled differently. Accordingly, each of the first to third convolution layers CONV1 to CONV3 may be divided into a plurality of tiles, and each of the first to third LSTM layers LSTM1 to LSTM3 may be divided into a plurality of tiles.

In some cases, two tiled layers may have the same skewness. In some cases, each of the tiled layers may have a distinct skewness. For example, as shown in FIG. 15, each of the tiles divided in the first convolution layer CONV1 may have a skewness of 3.1, each of the tiles divided in the second convolution layer CONV2 may have a skewness of 2.4, and each of the tiles divided in the third convolution layer CONV3 may have a skewness of 5.4. Similarly, each of the tiles divided in the first LSTM layer LSTM1 may have a skewness of 19.5, each of the tiles divided in the second LSTM layer LSTM2 may have a skewness of 22.1, and each of the tiles divided in the third LSTM layer LSTM3 may have a skewness of 51. As shown in FIG. 15, tiles of the first neural network 151 may have generally lower skewness than tiles of the second neural network 152, and accordingly, the second neural network 152 may be more sensitive to memory bandwidth than the first neural network 151. That is, the first neural network 151 may be relatively computationally intensive, and the second neural network 152 may be relatively memory intensive.

Referring to FIG. 16, the scheduler 160 may assign tiles of the first task TA1 corresponding to the first neural network 151 of FIG. 15 and tiles of the second task TA2 corresponding to the second neural network 152 to the first to m-th cores C1 to Cm (m is an integer greater than 1). In some embodiments, the scheduler 160 may correspond to the controller 141 of FIG. 14. A scheduler may be a component or module responsible for assigning tiles of different tasks to the processing cores of a system. For example, the scheduler 160 may allocate tiles based on the skewness of each tile. Accordingly, as shown in FIG. 16, tiles of the first task TA1, which are computation intensive, and tiles of the second task TA2, which are memory intensive, may be allocated to the first to m-th cores C1 to Cm in a balanced manner. Accordingly, it is possible to prevent tiles that are computationally intensive from being simultaneously allocated to the first to m-th cores C1 to Cm or tiles that are memory intensive to be simultaneously allocated.

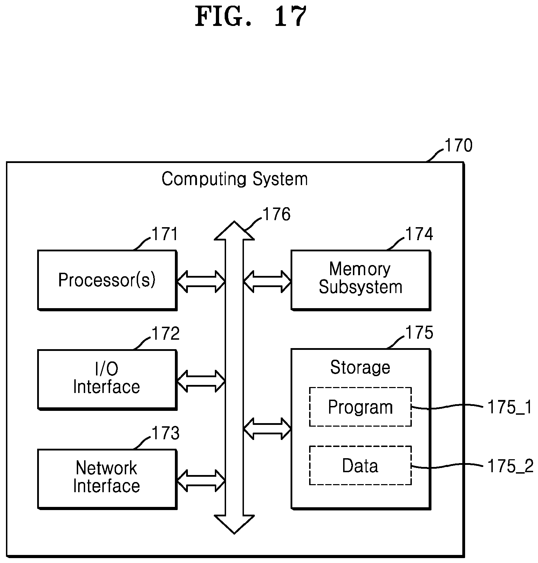

FIG. 17 is a block diagram illustrating a computing system 170 according to an embodiment. In some embodiments, the method for neural network tiling, described above with reference to the figures, may be performed in the computing system 170 of FIG. 17.

The computing system 170 may be a stationary computing system, such as a desktop computer, a workstation, a server, and the like and may be a portable computing system, such as a laptop computer. As shown in FIG. 17, the computing system 170 includes at least one processor 171, an input/output interface 172, a network interface 173, a memory subsystem 174, a storage 175, and a bus 176, and the at least one processor 171, the input/output interface 172, the network interface 173, the memory subsystem 174, and the storage 175 may communicate with each other through the bus 176.

The at least one processor 171 may also be referred to as at least one processing unit, and may execute a program like a central processing unit (CPU). A processor is an intelligent hardware device (e.g., a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof). In some cases, the processor is configured to operate a memory array using a memory controller. In other cases, a memory controller is integrated into the processor. In some cases, the processor is configured to execute computer-readable instructions stored in a memory to perform various functions. In some embodiments, a processor includes special purpose components for modem processing, baseband processing, digital signal processing, or transmission processing. For example, the at least one processor 171 may access memory subsystem 174 via the bus 176 and execute instructions stored in the memory subsystem 174.

The input/output interface 172 may include, or provide access to, input devices, such as keyboards, pointing devices, and the like, and/or output devices, such as display devices, printers, and the like. For example, a user can interact with the system through the input/output interface 172. This interface enables the user to perform various actions such as instruct the system to execute the program 175_1, load the data 175_2, input the input data IN of FIG. 1, and output the output data OUT of FIG. 1.

The network interface 173 may provide access to a network external to the computing system 170. For example, a network may include multiple computing systems and communication links, and the communication links may include wired links, optical links, and wireless links.

The memory subsystem 174 may store the program 175_1 using the method according to embodiments of the present disclosure, and at least one processor 171 may perform at least some of the operations included in the method for neural network tiling by executing a program (or instructions) stored in the memory subsystem 174. The memory subsystem 174 may include read only memory (ROM), random access memory (RAM), and the like.

The storage 175 is a non-transitory storage medium, and stored data may not be lost in conditions including that when the power supplied to the computing system 170 is cut off. For example, the storage 175 may include a nonvolatile memory device or a storage medium, such as a magnetic tape, an optical disk, or a magnetic disk. Also, the storage 175 may be removable from the computing system 170. As shown in FIG. 17, the storage 175 may store a program 175_1 and data 175_2. At least a portion of program 175_1 may be loaded into memory subsystem 174 before being executed by at least one processor 171. In some embodiments, the storage 175 may store a file written in a program language, and the program 175_1 generated by a compiler or the like from the file or at least a portion thereof may be loaded into the memory subsystem 174. At least one processor 171 may perform at least part of the method for tiling a neural network described above with reference to the drawings by executing the program 175_1. The data 175_2 may include data required to perform the method for neural network tiling described above with reference to the drawings, for example, input data IN and/or reference data REF of FIG. 1. Also, the data 175_2 may include data generated by performing the method for neural network tiling described above with reference to the drawings, for example, the output data OUT of FIG. 1.

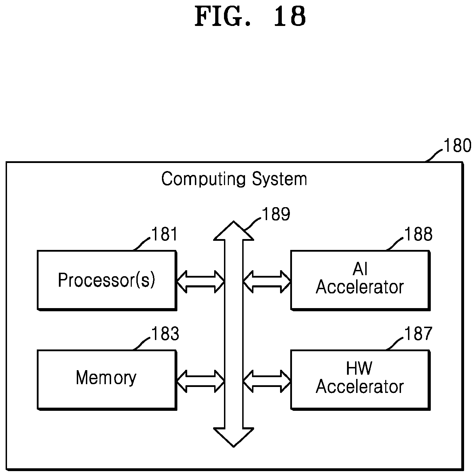

FIG. 18 is a block diagram illustrating a computing system 180 according to an embodiment. In some embodiments, a method for neural network tiling according to an example embodiment may be executed in the computing system 180.

Referring to FIG. 18, a system 180 may include at least one processor 181, a memory 183, an artificial intelligence (AI) accelerator 185, and a hardware accelerator 187, and the at least one processor 181, the memory 183, the AI accelerator 185, and the hardware accelerator 187 may communicate with each other through a bus 189. In some embodiments, the at least one processor 181, the memory 183, the AI accelerator 185, and the hardware accelerator 187 may be included in a semiconductor chip. However, embodiments of the present disclosure are not limited thereto. For example, in some embodiments, at least two of the at least one processor 181, the memory 183, the AI accelerator 185, and the hardware accelerator 187 may be included in two or more semiconductor chips mounted on a board, respectively.

The at least one processor 181 may execute instructions stored in a memory according to embodiments of the present disclosure. For example, the at least one processor 181 may execute an operating system by executing instructions stored in the memory 183 or may execute applications executed on the operating system. In some embodiments, by executing the instructions, the at least one processor 181 may instruct the AI accelerator 185 and/or the hardware accelerator 187 to execute and obtain a result of performing the task from the AI accelerator 185 and/or the hardware accelerator 187. In some embodiments, the at least one processor 181 may be an application specific instruction set processor (ASIP) customized for a specific purpose and may support a dedicated instruction set. In some embodiments, the at least one processor 181 may tile a neural network executed by AI accelerator 188 and may provide a tiling result to AI accelerator 188. That is, the neural network tiling may be performed online, and thus the AI accelerator 185 may efficiently execute various neural networks.

The memory 183 may have a structure for storing types of data. For example, the memory 183 may include a volatile memory device, such as Dynamic Random Access Memory (DRAM), Static Random Access Memory (SRAM), and the like, and may also include a non-volatile memory device, such as a flash memory, a Resistive Random Access Memory (RRAM), and the like. The at least one processor 181, the AI accelerator 185, and the hardware accelerator 187 may store data in the memory 183 or read data from the memory 183 through the bus 189.

The AI accelerator 185 may refer to hardware configured for AI applications. In some embodiments, the AI accelerator 185 may include a Neural Processing Unit (NPU) for implementing a neuromorphic structure, generate output data by processing input data provided from the at least one processor 181 and/or the hardware accelerator 187, and provide output data to the at least one processor 181 and/or the hardware accelerator 187. In some embodiments, the AI accelerator 185 may be programmable and may be programmed by the at least one processor 181 and/or the hardware accelerator 187.

The hardware accelerator 187 may refer to hardware configured to perform a certain task at high speed. For example, the hardware accelerator 187 may be configured to perform data conversion, such as demodulation, modulation, encoding, and decoding at high speed. The hardware accelerator 187 may be programmable and may be programmed by at least one processor 181 and/or the hardware accelerator 187.

While embodiments of the present disclosure have been particularly shown and described with reference to embodiments thereof, it will be understood that various changes in form and details may be made therein without departing from the scope of the following claims.

## Claims

1. A method for tiling a neural network, the method comprising:

   obtaining input data including neural network information of the neural network;
   calculating a skewness of a matrix operation between a feature map and a kernel of the neural network based on the neural network information;
   determining that the matrix operation comprises a memory bounded operation based on the skewness of the matrix operation;
   tiling the feature map and the kernel based on the determination.

2. The method of claim 1, wherein the calculating of the skewness comprises calculating a ratio of a size of a larger matrix to a size of a smaller matrix from the feature map and the kernel.

3. The method of claim 1 or 2, comprising:

   identifying a size of a tile corresponding to the feature map and the kernel;
   identifying a size of an input channel corresponding to the kernel;
   identifying, in a three-dimensional space, a point corresponding to the skewness, the size of the tile, and the size of the input channel; and
   identifying a first area including the identified point based on reference data defining the first area and a second area, wherein the first area comprises a memory bounded area and the second area comprises a computation bounded area.

4. The method of claim 3, wherein a boundary between the first area and the second area in the three-dimensional space is based on a size of a memory.

5. The method of claim 3 or 4, wherein the tiling of the feature map and the kernel comprises:

identifying, in the three-dimensional space, a first candidate point corresponding to a first case in which the kernel is divided in a kernel row direction and the feature map is divided in a feature map column direction;

identifying, in the three-dimensional space, a second candidate point corresponding to a second case in which the kernel is divided in a kernel column direction and the feature map is divided in a feature map row direction;

selecting a candidate point from among the first candidate point and the second candidate point; and

dividing the kernel and the feature map respectively in a manner corresponding to the selected candidate point.

6. The method of claim 5, wherein the selecting of the candidate point comprises:

calculating a first cost of the first candidate point based on a cost function;

calculating a second cost of the second candidate point based on the cost function; and

identifying a lower cost from among the first cost and the second cost, wherein the candidate point is selected based on the lower cost.

7. The method of claim 6, wherein the cost function corresponds to a ratio of a skewness of the candidate point to a skewness of a boundary between the first area and the second area in the three-dimensional space.

8. The method of any one of claims 1 to 7, comprising:

calculating a skewness of a subsequent matrix operation based on the tiling; and

performing a subsequent tiling based on the skewness of the subsequent matrix operation.

9. The method of claim 8, comprising:
determining whether an end condition is not satisfied, wherein the subsequent tiling is performed based on the end condition.

10. The method of claim 9, wherein the end condition is satisfied when a size of a tile corresponding to the feature map and the kernel is less than or equal to a memory budget in a hardware.

11. The method of claim 10, comprising:
providing at least one value corresponding to the tiled feature map and the tiled kernel to the hardware executing the neural network.

12. The method of any one of claims 1 to 11, wherein a hardware executing the neural network comprises a memory hierarchy, and wherein the tiling is completed sequentially from a lowest level memory to a highest level memory of the memory hierarchy.

13. The method of claim 12, wherein the hardware comprises a plurality of cores, and wherein the lowest level memory is shared by at least two of the plurality of cores.

14. The method of any one of claims 1 to 13, wherein a hardware executing the neural network comprises a plurality of processing units, wherein each of the plurality of processing units includes at least one core and a controller, and wherein the controller is configured to schedule the neural network based on the tiling.

15. An apparatus comprising:

at least one processor; and

a non-transitory storage medium storing instructions that cause the at least one processor to perform a method for tiling a neural network including a plurality of layers to be executed in hardware, when executed by the at least one processor,

wherein the method comprises:

obtaining input data including neural network information of the neural network;

calculating a skewness of a matrix operation between a feature map and a kernel of the neural network based on the neural network information;

determining that the matrix operation comprises a memory bounded operation based on the skewness of the matrix operation; and

tiling the feature map and the kernel based on the determination.

# FIG. 1

# FIG. 2

Kernel

×

Feature Map

# FIG. 3A

Kernel × Feature Map

# FIG. 3B

Kernel

Feature Map

# FIG. 3C

C=4

M=1

Kernel

×

X=7

C=4

Feature Map

# FIG. 3D

C=8

M=3

Kernel

×

X=1

C=8

Feature Map

# FIG. 4

START

INPUT DATA ⟶ OBTAIN INPUT DATA ─S10

CALCULATE SKEWNESS BETWEEN FEATURE MAP AND KERNEL ─S20

REFERENCE DATA ⟶ IDENTIFY AREA INCLUDING MATRIX OPERATION ─S30

TILE FEATURE AND KERNEL ─S60

IS MEMORY BOUNDED AREA IDENTIFIED? ─S40   YES

NO

IS END CONDITION SATISFIED? ─S50   NO

YES

OUTPUT DATA

END

# FIG. 5

# FIG. 6

# FIG. 7

# FIG. 8

S30'

START

IDENTIFY SIZE OF TILE —— S31

IDENTIFY SIZE OF INPUT CHANNEL —— S32

IDENTIFY POINT CORRESPONDING TO MATRIX OPERATION IN THREE-DIMENSIONAL SPACE —— S33

REF

REFERENCE DATA

IDENTIFY AREA INCLUDING POINT —— S34

END

# FIG. 9

S60'

START

IDENTIFY FIRST CANDIDATE POINT ── S61

IDENTIFY SECOND CANDIDATE POINT ── S62

SELECT CANDIDATE POINT ── S63

DIVIDE KERNEL AND FEATURE MAP ── S64

END

# FIG. 10A

Kernel × Feature Map

EP 4 383 130 A1

# FIG. 10B

Kernel    ×    Feature Map

27

# FIG. 11

S63'

```
┌─────────────┐
│    START    │
└─────────────┘
       │
       ▼
┌──────────────────────────┐
│     CALCULATE COST OF     │──── S63_1
│   FIRST CANDIDATE POINT   │
└──────────────────────────┘
       │
       ▼
┌──────────────────────────┐
│     CALCULATE COST OF     │──── S63_2
│  SECOND CANDIDATE POINT   │
└──────────────────────────┘
       │
       ▼
┌──────────────────────────┐
│    SELECT CANDIDATE POINT  │──── S63_3
│  CORRESPONDING TO LOWER COST │
└──────────────────────────┘
       │
       ▼
┌─────────────┐
│     END     │
└─────────────┘
```

# FIG. 12

# FIG. 13

130

FIG. 14

EP 4 383 130 A1

# FIG. 15

151

| CONV1 | 3.1 | 3.1 | 3.1 | 3.1 | 3.1 | 3.1 | 3.1 |

| CONV2 | 2.4 | 2.4 | 2.4 | 2.4 | 2.4 | 2.4 | 2.4 |

| CONV3 | 5.4 | 5.4 | 5.4 | 5.4 | 5.4 | 5.4 | 5.4 |

152

| LSTM1 | 19.5 | 19.5 | 19.5 | 19.5 | 19.5 | 19.5 | 19.5 |

| LSTM2 | 22.1 | 22.1 | 22.1 | 22.1 | 22.1 | 22.1 | 22.1 |

| LSTM3 | 51 | 51 | 51 | 51 | 51 | 51 | 51 |

# FIG. 16

# FIG. 17

# FIG. 18

Computing System — 180

Processor(s) — 181

189

AI Accelerator — 188

Memory — 183

HW Accelerator — 187

Europäisches
Patentamt
European
Patent Office
Office européen
des brevets

# EUROPEAN SEARCH REPORT

Application Number

EP 23 21 4675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUNG H T KUNG@HARVARD EDU ET AL: "CAKE matrix multiplication using constant-bandwidth blocks", PROCEEDINGS OF THE 21TH ACM INTERNATIONAL CONFERENCE ON INTELLIGENT VIRTUAL AGENTS, ACMPUB27, NEW YORK, NY, USA, 14 November 2021 (2021-11-14), pages 1-14, XP058661203, DOI: 10.1145/3458817.3476166 ISBN: 978-1-4503-8619-7 * abstract; figures 1-4, 6, 7-12 * * page 1 – page 9 * * sections 6-7 and Appendix * ----- | 1-15 | INV. G06N3/0442 G06N3/0464 G06N3/063 ADD. G06N3/045 |

TECHNICAL FIELDS SEARCHED (IPC)

G06N

The present search report has been drawn up for all claims

| Place of search | Date of completion of the search | Examiner |
|---|---|---|
| The Hague | 10 April 2024 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................
& : member of the same patent family, corresponding
    document

EPO FORM 1503 03.82 (P04C01)